# EUROPEAN PATENT APPLICATION

(11) **EP 0 934 834 A2**
(43) Date of publication of application: **11.08.1999**
(21) Application number: 98107543.5
(22) Date of filing: 24.04.1998
(51) Int. Cl.: B44D 2/00, B05D 5/06

(54) **Method for painting a mug with transfer paper and wax-based coloring material**

(30) Priority: 05.02.1998 US 19785
(71) Applicant: Chang, Te-Hsing, Taipei (TW)
(72) Inventor: Chang, Te-Hsing, Taipei (TW)
(74) Representative: Grünecker, Kinkeldey, Stockmair & Schwanhäusser Anwaltssozietät

(57) **Abstract**

A method for painting a mug is disclosed, including the following steps: (1) providing a surface coating on a surface of the mug, the coating comprising a mixture of resin and resin hardener; (2) providing a coloration material by mixing together 30-50% wax or paraffin, 20-40% resin, 10-50% animal grease/plant oil and 10-20% pigment; (3) drawing desired patterns on the surface coating; (4) heat treating the mug; and (5) cooling down the mug and removing the residual coloration mixture. There may be selectively added steps of the above described method, comprising (a) making a transpaper on which desired pattern are printed with the coloration mixture prepared at step (2); (b) temporarily securing the transpaper on the mug surface and applying pressure thereto; and (c) heat treating the mug and then cleaning the mug.

## Description

### 1. FIELD OF THE INVENTION

The present invention relates generally to a method for painting a mug and in particular to a method to paint the mug with transfer paper and wax-based coloration material.

### 2. BACKGROUND OF THE INVENTION

Mugs are a ceramic product and conventionally, patterns are formed on the mugs by means of glazing and high temperature firing which require heat treatment by means of special and very expensive facility. Such a facility is in general not available for general consumers so that there is almost no way for the general consumers to paint the mugs by themselves.

There is a method for painting a substrate without using such a facility, such as that disclosed in US patent No. 5,654,036 in which a surface coating of resin is provided on the substrate and dried and then a coloration mixture composed of a dye capable of impregnating into the surface resin coating and a releasable resin is applied to the surface coating to form desired patterns. Once the coloration mixture is dried, the releasable resin is peeled off. Such a method, although requiring no glazing and high temperature firing, is still cumbersome for it requires two drying operations, one for the surface coating and the other for the coloration mixture.

Thus it is desirable to provide a method for painting mugs without using any complicated and expensive equipment so that general consumers may paint the mug by themselves and the painting operation may be done in a simpler way.

### SUMMARY OF THE INVENTION

Therefor, an object of the present invention is to provide a mug painting method which requires no expensive glazing and high temperature firing facility and thus allows general consumers to perform the painting operation by themselves.

Another object of the present invention is to provide a mug painting method which requires only one drying operation so that the painting process is significantly simplified.

A further object of the present invention is to provide a mug painting method in which the coloration material is made in the form of a bar so that the general consumers may readily draw any desired pattern on the mug.

A further object of the present invention is to provide a mug painting method in which a transpaper having pre-printed pattern of the coloration material provided in accordance with the present invention may be attached to the surface of the mug to have the patterns transferred to the mug surface so that painting the mug may be carried in an even easier way.

To achieve the above objects, there is provided a method for painting a mug, comprising the steps of (1) providing a surface coating on a surface of the mug, the coating comprising a mixture of resin and resin hardener, the mixture being applied to the mug surface with any known means, such as brush coating, spray coating and roller coating and, due to the hardener, hardened to form the surface coating; (2) providing a coloration material by mixing together 30-50% wax or paraffin, 20-40% resin, 10-50% animal grease/plant oil and 10-20% pigment, the painting material being preferably made in the form of a bar to allow a user to hold for drawing on the mug surface; (3) drawing desired patterns on the surface coating; (4) heat treating the mug by raising temperature to at least 65°C, preferably at least 100°C, to allow the pigment and the resin of the coloration mixture to be bonded to the surface coating of the mug; and (5) cooling down the mug to below 40°C and removing the residual coloration mixture that is not bonded to the surface coating by weeping with cloth, tissue paper or the like. There may be selectively added steps of the above described method, comprising (a) making a transpaper on which desired pattern are printed with the coloration mixture prepared at step (2); (b) temporarily securing the transpaper on the mug surface and applying pressure thereto to have the pattern attached to the mug surface; and (c) heat treating the mug and then cleaning the mug.

In accordance with the present invention, the ways to form patterns on the mug surface includes at least using the bar to draw on the mug surface or using the pre-printed transpaper to transfer the patterns to the mug surface. These ways of forming the patterns may be repeated in any combination thereof.

### DETAILED DESCRIPTION OF THE PREFERRED EMBODIMENT

A method for painting a mug in accordance with the present invention will now be described in detail. In accordance with the present invention, a mug is provided and a pre-processing is performed on the mug. The preprocessing comprises forming a coating on a surface of the mug. The coating comprises a two component resin material of which the first component is a resin and the second component is a resin hardener which when mixed with the resin cures the resin after a predetermined time period and forming a smooth, hard and preferably transparent surface coating on the mug surface so that when a mixture of the two component is applied to the surface of the mug, a smooth, hard and transparent coating is formed after the resin is cured.

In accordance with the present invention, a coloration material is formed by mixing 30-50% wax or paraffin, 20-40% resin, 10-50% animal grease or plant oil and 10-20% pigment. The coloration material is then used to paint the pre-processed mug surface to form any desired patterns thereon.

Due to the wax, the coloration material may be formed as a solid bar which may be soft and readily deformed. The bar may then be used by general consumers to draw any desired patterns on the pre-processed mug surface.

Alternatively, a transpaper having an inside face on which patterns are printed with the coloration material may be used instead. The transpaper is attached to the mug surface with the inside face thereof that carries the pattern thereon in contact with the pre-processed mug surface for example by means of pressure sensitive adhesive tape. A solid and rigid article, such as a wooden bar, is then used to press and sweep through the outside face of transpaper to have the coloration pattern on the inside face of the transpaper transferred to the mug surface.

Thereafter, the mug is heat treated to have the coloration material secured to the pre-processed surface of the mug. In accordance with a preferred embodiment, the heat treatment is carried out by raising the temperature of the mug to at least 65°C and preferably at least 100°C for a period of 4-6 minutes. With such a heat treatment, the resin that is contained in the coloration material is bonded to the resin of the mug surface coating so as to secure the pigment on the mug surface which may not be removed simply by rubbing that a mug may be subject to during normal use. Further, the patter on the mug surface so formed is also resistant to solvents or detergents. Thus, a very tough pattern may be obtained.

In accordance with the present invention, the heat treatment may be carried out by placing the mug with the patterns thereon in a household baking oven or a microwave oven. Preferably, water is filled into the mug before the heat treatment is carried out in the baking oven or microwave oven with temperature raised to at least 100°C. The water helps to prevent the temperature of the mug from getting too high.

The mug is then cooled down. If there is any residual of the coloration material after the heat treatment, then after the mug has been cooled down to an acceptable temperature, such as 40°C, a piece of tissue paper or cloth or the like may be used to weep the mug surface to remove the residual.

If desired, the painting process, namely drawing patterns on the mug or attaching the patterns to the mug by means of transpaper may be repeated once the previously formed patterns have been heat treated to bond to the surface coating. For example, a first pattern may be formed by using the transpaper and has been heat treated. Thereafter, if needed, the mug surface is cleaned to remove the residual coloration material, and a second pattern may then be formed on the mug surface by being drawn with the coloration bar. The heat treatment and surface cleaning, if needed, are repeated as described above.

In accordance with the present invention, there are two preferred ways of forming the patterns on the mug surface, namely using the coloration bar and the transpaper. Certainly there are other ways to achieve the same purpose. These pattern forming ways may be used repeated in any combination.

This completes the formation of patterns on the mug surface and such patterns may not be removed or damaged simply by rubbing for the pigment is fixed to the mug surface by means of the bonding of the resin contained in the coloration material to the resin component of the surface coating that is formed on the mug surface.

The coloration material bar may also be used to make drawings on other substrate, such as a piece of cloth. The drawings that are formed on the cloth by means of the coloration bar may be permanently secured to the cloth by being ironed. The high temperature provided by the ironing process allows the resin of the coloration material to be fixed to the cloth which may not be washed off the cloth so that a permanent pattern may be formed.

Although the preferred embodiment and/or best mode has been described to illustrate the present invention, it is apparent that changes and modifications in the specifically described mode can be carried out without departing from the scope of the invention which is intended to be limited only by the appended claims.

## Claims

1. A mug painting method comprising the following steps:
a) providing a mug and preprocessing a surface of the mug by forming a coating of a mixture of resin and hardener so that after a given period, the hardener cures the resin and thus forms a hard and smooth surface coating on the mug;
b) providing a coloration material by mixing wax, resin, oil and pigment and forming a pattern on the mug surface with the coloration material;
c) heat treating the mug by means of a predetermined treating temperature for a given period of time to have the resin of the coloration material bonded to the resin of the surface coating; and
d) cooling down the mug to a predetermined temperature and removing residual of the coloration material from the mug surface.

2. The method as claimed in Claim 1, wherein the coloration material comprises 30-50% wax, 20-40% resin, 10-50% oil and 10-20% pigment.

3. The method as claimed in Claim 1, wherein the treating temperature of the heat treatment is at least 65°C.

4. The method as claimed in Claim 1, wherein the time period for carrying out the heat treatment is 4-6 minutes.

5. The method as claimed in Claim 1, wherein the predetermined temperature in the cool-down step is 40°C.

6. The method as claimed in Claim 1, wherein the coloration material is made in the form of a bar and wherein the pattern is formed by using the bar to draw on the mug surface.

7. The method as claimed in Claim 1, wherein the coloration material is printed on a transpaper to form a pattern corresponding to that to be formed on the mug surface and wherein the pattern on the mug surface is formed by attaching the transpaper on the mug surface and using a hard article to sweep through the transpaper to have the coloration material fixed to the mug surface.

8. The method as claimed in Claim 7, further comprising steps of (e) forming a bar of the coloration material, (f) using the bar to draw on the mug surface to form a second pattern on the mug surface, (g) heat treating the mug surface again and (h), if needed, removing the residual coloration material that is drawn on the mug surface with the bar.

9. A coloration material for painting a surface of a substrate comprising 30-50% wax, 20-40% resin, 10-50% oil and 10-20% pigment.

10. The coloration material as claimed in claim 1, wherein the substrate is selected from the group consisting of metal, glass, ceramics, plastic, and cloths.
